# EUROPEAN PATENT SPECIFICATION

(11) **EP 1 550 175 B1**
(45) Date of publication and mention of the grant of the patent: **13.12.2006**
(21) Application number: 03750949.4
(22) Date of filing: 24.09.2003
(51) Int. Cl.: H01P 3/00

(54) **COMMUNICATION METHODS AND APPARATUS**
KOMMUNIKATIONSVERFAHREN UND VORRICHTUNG
PROCEDES ET APPAREIL DE COMMUNICATION

(30) Priority: 02.10.2002 GB 0222828; 04.11.2002 GB 0225653; 18.07.2003 GB 0316899
(43) Date of publication of application: 06.07.2005
(73) Proprietor: ARTIMI LTD, Cambridge CB2 1LQ (GB)
(72) Inventor: LANG, Jack, Arnold, Artimi Ltd, Cambridge, Cambridgeshire CB2 1LQ (GB); MOORE, Mark, Artimi Ltd, Cambridge, Cambridgeshire CB2 1LQ (GB); STARKIE, Tim, Artimi Ltd, Cambridge, Cambridgeshire CB2 1LQ (GB)
(74) Representative: Martin, Philip John
(86) International application number: PCT/GB2003/004084
(87) International publication number: WO 2004/032277

(56) References cited:
- WO-A-01/80440
- US-A- 5 832 364
- US-A- 5 982 276
- US-A- 6 151 480

## Description

This invention generally relates to methods and apparatus for radio frequency communications over mains power cabling and other wiring, in particular communications at microwave frequencies. Embodiments of the invention are particularly suitable for ultra wideband (UWB) communications.

Techniques for UWB communication developed from radar and other military applications, and pioneering work was carried out by Dr G.F. Ross, as described in US3728632. Ultra-wideband communications systems employ very short pulses of electromagnetic radiation (impulses) with short rise and fall times, resulting in a spectrum with a very wide bandwidth. Some systems employ direct excitation of an antenna with such a pulse which then radiates with its characteristic impulse or step response (depending upon the excitation). Such systems are referred to as carrierless or "carrier free" since the resulting rf emission lacks any well-defined carrier frequency. However other UWB systems radiate one or a few cycles of a high frequency carrier and thus it is possible to define a meaningful centre frequency and/or phase despite the large signal bandwidth. The US Federal Communications Commission (FCC) defines UWB as a -10dB bandwidth of at least 25% of a centre (or average) frequency or a bandwidth of at least 1.5GHz; the US DARPA definition is similar but refers to a - 20dB bandwidth. Such formal definitions are useful and clearly differentiates UWB systems from conventional narrow and wideband systems but the techniques described in this specification are not limited to systems falling within this precise definition.

UWB communications systems have a number of advantages over conventional systems. Broadly speaking, the very large bandwidth facilitates very high data rate communications and since pulses of radiation are employed the average transmit power (and also power consumption) may be kept low even though the power in each pulse may be relatively large. Also, since the power in each pulse is spread over a large bandwidth the power per unit frequency may be very low indeed, allowing UWB systems to coexist with other spectrum users and, in military applications, providing a low probability of intercept. The short pulses also make UWB communications systems relatively unsusceptible to multipath effects since multiple reflections can in general be resolved. Finally UWB systems lend themselves to a substantially all-digital implementation, with consequent cost savings and other advantages.

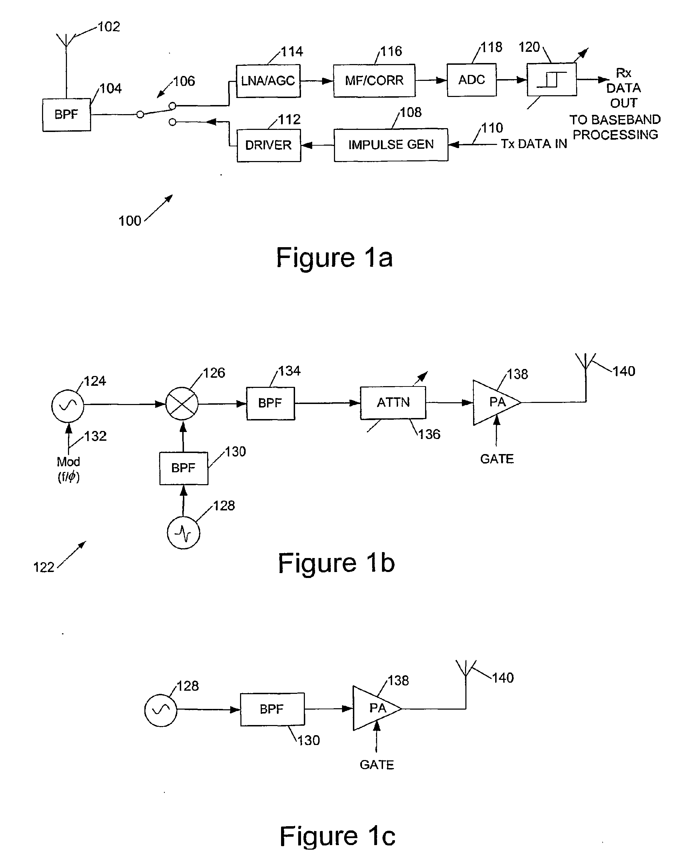

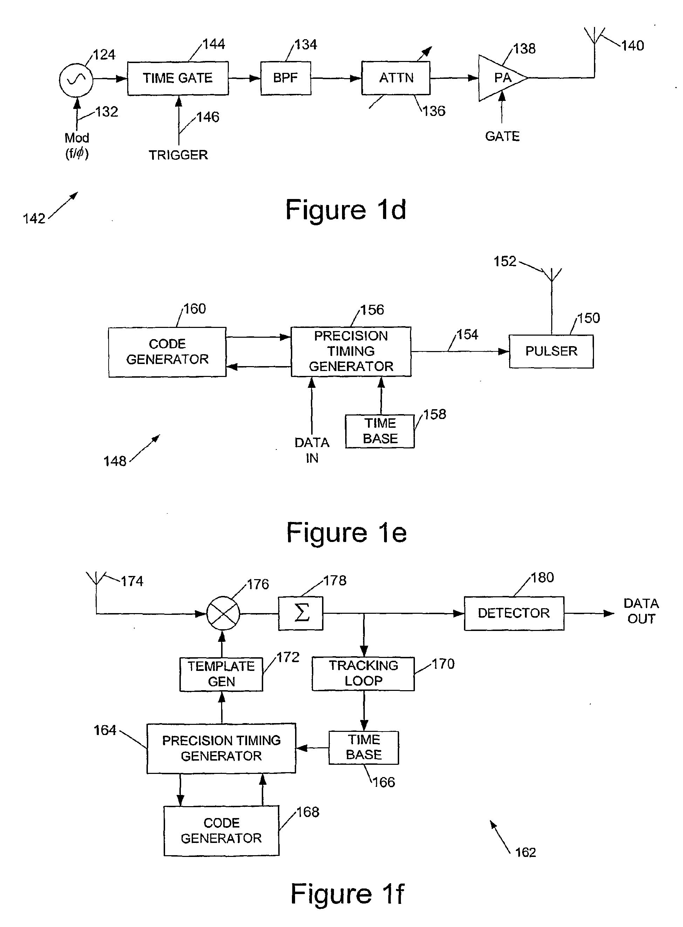

Figure 1a shows an example of an analogue UWB transceiver 100. This comprises an transmit/receive antenna 102 with a characteristic impulse response indicated by bandpass filter (BPF) 104 (although in some instances a bandpass filter may be explicitly included), couples to a transmit/receive switch 106.

The transmit chain comprises an impulse generator 108 modulatable by a baseband transmit data input 110, and an antenna driver 112. The driver may be omitted since only a small output voltage swing is generally required. One of a number of modulation techniques may be employed, typically either OOK (on-off keying i.e. transmitting or not transmitting a pulse), M-ary amplitude shift keying (pulse amplitude modulation), phase shift modulation, or PPM (pulse position modulation i.e. dithering the pulse position). Typically the transmitted pulse has a duration of <1ns and may have a bandwidth of the order of gigahertz.

The receive chain typically comprises a low noise amplifier (LNA) and automatic gain control (AGC) stage 114 followed by a correlator or matched filter (MF) 116, matched to the received pulse shape so that it outputs an impulse when presented with rf energy having the correct (matching) pulse shape. The output of MF 116 is generally digitised by an analogue-to-digital converter (ADC) 118 and then presented to a (digital or software-based) variable gain threshold circuit 120, the output of which comprises the received data. The skilled person will understand that forward error correction (FEC) such as block error coding and other baseband processing may also be employed, but such techniques are well-known and conventional and hence these is omitted for clarity. Advantageously rake receiver techniques may be employed (see, for example, WO 01/93441, WO 01/93442, WO 01/93482).

Figure 1b shows one example of a carrier-based UWB transmitter 122. A similar transmitter is described in more detail in US 6,026,125. This form of transmitter allows the UWB transmission centre frequency and bandwidth to be controlled and, because it is carrier-based, allows the use of frequency and phase as well as amplitude and position modulation. Thus, for example, QAM (quadrature amplitude modulation) or M-ary PSK (phase shift keying) may be employed.

Referring to Figure 1b, an oscillator 124 generates a high frequency carrier which is gated by a mixer 126 which, in effect, acts as a high speed switch. A second input to the mixer is provided by an impulse generator 128, filtered by an (optional) bandpass filter 130. The amplitude of the filtered impulse determines the time for which the mixer diodes are forward biased and hence the effective pulse width and bandwidth of the UWB signal at the output of the mixer. The bandwidth of the UWB signal is similarly also determined by the bandwidth of filter 130. The centre frequency and instantaneous phase of the UWB signal is determined by oscillator 124, and may be modulated by a data input 132. An example of a transmitter with a centre frequency of 1.5GHz and a bandwidth of 400MHz is described in US 6,026,125. Pulse to pulse coherency can be achieved by phase locking the impulse generator to the oscillator.

The output of mixer 126 is processed by a bandpass filter 134 to reject out-of-band frequencies and undesirable mixer products, optionally attenuated by a digitally controlled rf attenuator 136 to allow additional amplitude modulation, and then passed to a wideband power amplifier 138 such as a MMIC (monolithic microwave integrated circuit), and transmit antenna 140. The power amplifier may be gated on and off in synchrony with the impulses from generator 128, as described in US' 125, to reduce power consumption.

Figure 1c shows a similar transmitter to that of Figure 1b, in which like elements have like reference numerals. The transmitter of Figure 1c is, broadly speaking, a special case of the transmitter of Figure 1b in which the oscillator frequency has been set to zero. The output of oscillator 124 of Figure 1b is effectively a dc level which serves to keep mixer 126 always on, so these elements are omitted (and the impulse generator or its output is modulated).

Figure 1d shows an alternative carrier-based UWB transmitter 142, also described in US6,026,125. Again like elements to those of Figure 1b are shown by like reference numerals.

In the arrangement of Figure 1d a time gating circuit 144 gates the output of oscillator 124 under control of a timing signal 146. The pulse width of this timing signal determines the instantaneous UWB signal bandwidth. Thus the transmitted signal UWB bandwidth may be adjusted by adjusting the width of this pulse.

Ultra-wideband receivers suitable for use with the UWB transmitters of Figures 1b to 1d are described in US 5,901,172. These receivers use tunnel diode-based detectors to enable single pulse detection at high speeds (several megabits per second) with reduced vulnerability to in-band interference. Broadly speaking a tunnel diode is switched between active and inactive modes, charge stored in the diode being discharged during its inactive mode. The tunnel diode acts, in effect, as a time-gated matched filter, and the correlation operation is synchronised to the incoming pulses.

Figure 1e shows another example of a known UWB transmitter 148, described in US 6,304,623. In Figure 1e a pulser 150 generates an rf pulse for transmission by antenna 152 under control of a timing signal 154 provided by a precision timing generator 156, itself controlled by a stable timebase 158. A code generator 160 receives a reference clock from the timing generator and provides pseudo-random time offset commands to the timing generator for dithering the transmitter pulse positions. This has the effect of spreading and flattening the comb-like spectrum which would otherwise be produced by regular, narrow pulses (in some systems amplitude modulation may be employed for a similar effect).

Figure 1f shows a corresponding receiver 162, also described in US'623. This uses a similar timing generator 164, timebase 166 and code generator 168 (generating the same pseudo-random sequence), but the timebase 166 is locked to the received signal by a tracking loop filter 170. The timing signal output of timing generator 164 drives a template generator 172 which outputs a template signal and a correlator/sampler 176 and accumulator 178 samples and correlates the received signal with the template, integrating over an aperture time of the correlator to produce an output which is sampled at the end of an integration cycle by a detector 180 to determine whether a one or a zero has been received.

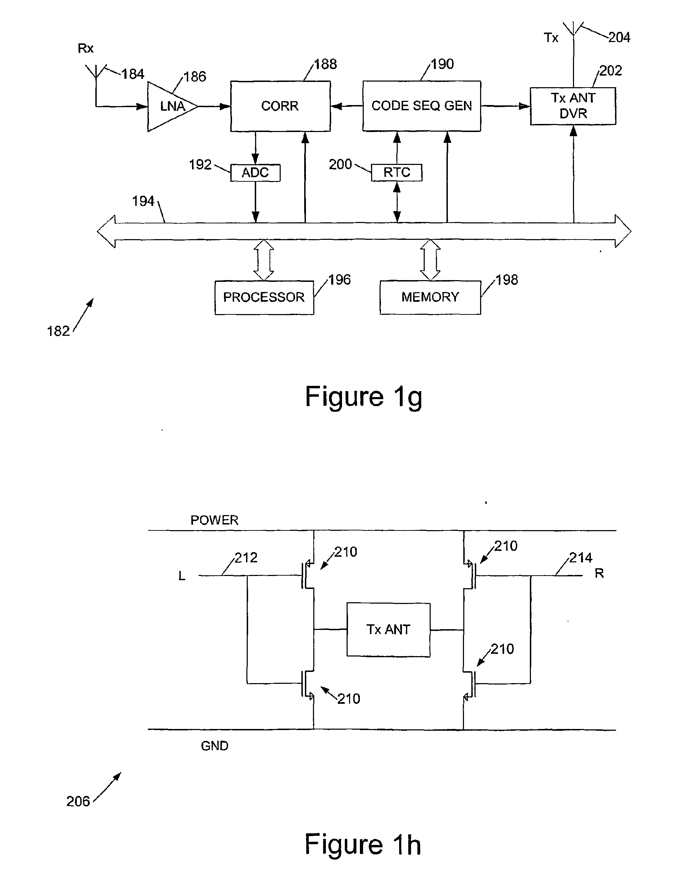

Figure 1 g shows a UWB transceiver 182 employing spread spectrum-type coding techniques. A transceiver of the general type is described in more detail in US 6,400,754, to which reference may be made.

In Figure 1g a receive antenna 184 and low noise amplifier 186 provide one input to a time-integrating correlator 188. A second input to the correlator is provided by a code sequence generator 190 which generates a spread spectrum-type code such as a Kasami code, that is a code with a high auto-correlation coefficient from a family of codes with low cross-correlation coefficients. Correlator 188 multiplies the analogue input signal by the reference code and integrates over a code sequence period and may comprise a matched filter with a plurality of phases representing different time alignments of the input signal and reference code. The correlator output is digitised by analogue-to-digital converter 192 which provides an output to a bus 194 controlled by a processor 196 with memory 198 the code sequence generator 190 is driven by a crystal oscillator driven clock 200 a transmit antenna driver 202 receives data from bus 194 which is multiplied by a code sequence from generator 190 and transmitted from transmit antenna 204. In operation coded sequences of impulse doublets are received and transmitted, in one arrangement each bit comprising a 1023-chip sequence of 10ns chips, thus having a duration of 10µs and providing 30dB processing gain. Shorter spreading sequences and/or faster clocks may be employed for higher bit rates.

The transceiver described in US 6,400,754 uses a modification of a frequency-independent current-mode shielded loop antenna (described in US 4,506,267) comprising a flat rectangular conducting plate. This antenna is referred to as a large-current radiator (LCR) antenna and when driven by a current it radiates outwards on the surface of the plate.

Figure 1h shows a driver circuit 206 for such an LCR transmit antenna 208. The antenna is driven by an H-bridge comprising four MOSFETs 210 controlled by left (L) and right (R) control lines 212, 214. By toggling line 214 high then low whilst maintaining line 214 low an impulse doublet (that is a pair of impulses of opposite polarity) of a first polarity is transmitted, and by toggling line 212 high then low whilst holding line 214 low an impulse doublet of opposite polarity is radiated. The antenna only radiates whilst the current through it changes, and transmits a single gaussian impulse on each transition.

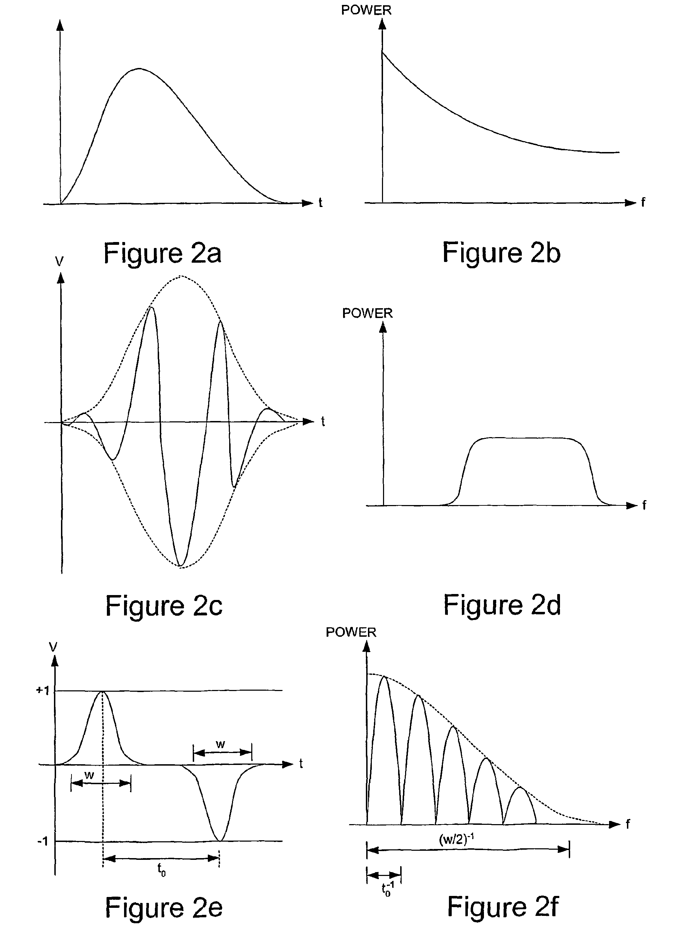

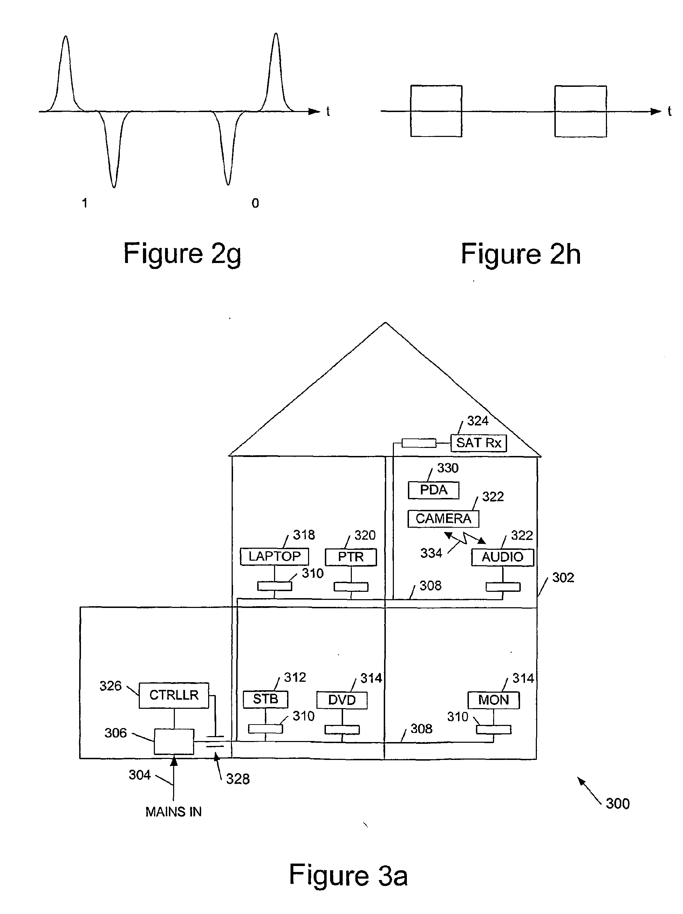

Figures 2a to 2h show some examples of UWB waveforms. Figure 2a shows a typical output waveform of a UWB impulse transmitter, and Figure 1b shows the power spectrum of the waveform of Figure 2a. Figure 2c shows a wavelet pulse (which when shortened becomes a monocycle) such as might be radiated from one of the transmitters of Figures 1b to 1d. Figure 2d shows the power spectrum of Figure 2c. Figure 2e shows an impulse doublet and Figure 2f the power spectrum of the doublet of Figure 2e. It can be seen that the spectrum of Figure 2f comprises a comb with a spacing (in frequency) determined by the spacing (in time) of the impulses of the doublet and an overall bandwidth determined by the width of each impulse. It can also be appreciated from Figures 2e and 2f that dithering the pulse positions will tend to reduce the nulls of the comb spectrum. Figure 2g shows examples of basis impulse doublet waveforms for a logic 0 and a logic 1. Figure 2h shows an example of a TDMA UWB transmission such as might be radiated from the transceiver of Figure 1g, in which bursts of Code Division Multiple access (CDMA) -encoded data are separated by periods of non-transmission to allow access by other devices.

Ultrawide band potentially offers significant advantages for wireless home networking, particularly broadband networking for audio and video entertainment devices. However the wide bandwidth of UWB communications is causing concern, particularly in relation to possible interference with GPS (Global Positioning System) and Avionics Systems. For this reason although use of UWB has recently been approved by the FCC in the US, operation is only permitted at very low powers and over a restricted bandwidth (3.1 to 10.6GHz). There is therefore a need for methods and apparatus to facilitate UWB communications at low powers, particularly in the home. It is not just in UWB communications, however, that a need exists for improved techniques for communications, in particular over mains power cabling. The benefits of such communication are easy to appreciate as mains cabling and associated power outlets provide, in effect, in-built wiring for a home network should the right techniques exist to be able to make use of such wiring. There are, however, many difficulties because of the relatively high level of interference, sometimes of a broadband nature, because of relatively strong notches in the cabling frequency response from resonant circuits and suppressors connected to the mains, and because of generally poor matching resulting in many reflections and ringing. Not withstanding these problems there is a significant body of prior art relating to the transmission of radio frequency signals over power cabling as can be seen, for example, from the Powerline World website (www.powerlineworld.com) and the Powerline Communications network website (www.powerlinecommunications.net). Several companies are involved in this field including Intracoastal System Engineering Corporation, Canada; Nsine Limited, in the UK; Echelon Corporation in California, USA; Intellon Corporation, Florida, USA; Cogency in Canada; and in the UWB field, Pulselink, Inc, California, USA; as well as miscellaneous other companies with an interest (see, for example, EPO 961 415; WO99/48224; US6,172,597; WO96/17444; and GB2,304,013). Two well known standards for power line communications are Lon Works and the Home Plug standard, both of which employ a differential signalling between pairs of mains conductors such as, for example, live and neutral (for Lon Works see, for example, WO92/21180 and the related US5,485,040; for HomePlug see, for example, EPO 419 047 and US4,755,792 referenced therein). US5,982,276 describes a method and system for magnetic field based communication over high voltage power transmission lines using a MASER.

Until now communications over mains power wiring has included systems using CW FSK and pulsed frequency bursts. US 6,218,931 describes a method of distributing CDMA (Code-Division Multiple Access) signals having a frequency higher than 1GHz, the method comprising the steps of: generating a wideband spread spectrum signal, and coupling the spread spectrum signal to a wiring grid to distribute the signal. More effective communication at higher data rates has focussed on the use of othogonal frequency division multiplexing (OFDM) and associated protocols as OFDM facilitates the selection of carriers to avoid interference and/or frequency response notches, and also facilitates data recovery even when one or more carriers has been lost (examples of such techniques can be found in patents held by Intellon Corp). The rf frequencies involved have generally been low - for example the HomePlug PHY occupies a band of from approximately 4.5 MHz to 21 MHz and achieves a raw bit rate of approximately 20 Mbps; another system from Cogency appears to use frequencies up to 40 MHz with the aim of obtaining raw bit rates of up to 100 Mbps with multiple bits per symbol. Generally speaking frequencies above these ranges have until now been ignored for power line communications, perhaps because to a differential signal a power cable looks much like a short circuit at these frequencies. It is, however, generally desirable to provide increased data rates for power line communications although it has not previously been recognised how this can be achieved. However consideration of the transmission of UWB signals over mains has led the inventors to a recognition of how the data rates for power line communications may be increased for a broad range of types of rf signal, not limited to UWB.

According to a first aspect of the present invention there is therefore provided a method of communicating a microwave signal having a frequency of 1 GHz or higher using a cable comprising at least one conductor, the method comprising: positioning a transmit antenna at a transmission point on said cable at a distance from said cable to couple said microwave signal into said cable; driving said transmit antenna with said microwave signal to induce onto said cable a propagating wave to propagate along said cable; positioning a receive antenna to receive an electromagnetic signal generated by said propagating wave; receiving a version of said microwave signal using said receive antenna; and wherein said propagating wave comprises a single-ended signal.

The inventors have recognised that at high frequencies, particularly above 1 GHz, signals can be induced to propagate along a conductor or bundle of conductors such as a mains power cable as a common mode or single ended voltage signal rather than using pairs of conductors to carry a differential signal. At these microwave frequencies the cable guides the propagating wave which exists at the surface of the conductor (due to the skin effect) and between the conductor and ground or earth external to the conductor for the propagating wave and the more conventional view of the signals flowing down a conductor as understood at lower frequencies, is less relevant. Typically a mains power cable will comprise a bundle of conductors, often including an earth conductor, and in this case it is believed that the signal propagates on the bundle of conductors taken as a whole so that the separate conductors are, in effect, operating in a common mode configuration. Where a metal conduit is employed to enclose the mains cable it is believed that the signal flows over this conduit; by analogy in a modification of the method at least one conductor may comprise, for example, a water pipe rather than a conductor of an electrical cable. Broadly speaking the conductor forms a waveguide with the surrounding ground and this waveguide guides the microwave signal somewhat analogously to surface waveguiding and/or an rf stripline. Thus even where the mains cable has an earth wire which carries a portion of the common mode signal, the microwave signal can still propagate along the cable, although a connection to actual earth at some point may cause an impedance mismatch and thus give rise to a reflection.

In addition to facilitating higher data communications because of the higher frequencies involved, guiding a microwave signal in this manner has some additional advantages over a differential driver arrangement. With a differential drive radiation into the air in proximity to the cable drops off rapidly with distance whereas in embodiments of the above described method the radiation extends much further from the cable, setting up electrical magnetic fields between the cable and surrounding ground and providing a much larger space within which a receive antenna may be usefully positioned. Further with a differential drive arrangement dielectric losses are relatively high whereas with embodiments of the above described methods only a small electric field is developed across the cable sheath and in the main air is the dielectric, thus reducing these losses.

In embodiments, unlike conventional systems, the propagating wave is effectively driven with respect to a ground for the propagating wave, although this ground is formed from the surroundings of the mains cable (or other conductor) guiding the wave. At low frequencies it is difficult to couple into this propagating wave ground because of the very long wave lengths which are involved, but at high frequencies it is practicable to employ a local ground which acts as an effective ground for the propagating wave. This local or effective ground may comprise a local ground plane, even another portion of mains wiring providing that this is isolated at microwave frequencies from the portion carrying the propagation wave, and/or a "connection" to free space formed by an antenna providing electromagnetic coupling into space. The local or effective ground preferably does not comprise a direct connection to ground such as an earth site. The local or effective connection to ground preferably, therefore, provides an indirect connection to ground for the propagating wave(s), through capacitative coupling to the environment providing ground for the propagating wave and/or by means of electromagnetic coupling to free space at the frequencies of interest. Preferably the impedance between the effective or local ground and ground for the propagating waves is substantially equal to or less than the impedance of free space, most preferably substantially less than this impedance, for example a factor of 10 less, to provide good coupling to ground for the propagating wave. Thus in the above method the driving may comprise driving the transmit antenna with respect to this local or effective ground.

To couple the microwave signal into the cable the transmit antenna is preferably at a distance from the cable (more particularly, from the conductor surface) equal to or less than an average free space wavelength of the microwave signal (in case of a UWB signal an average wavelength for a frequency band may be employed, or a maximum or minimum wavelength); more preferably the cable conductor is in the near field region of the antenna (the near field region is within a distance from the antenna of the free space wavelength divided by 2π); most preferably the antenna is substantially adjacent to the cable. In terms of impedance, the antenna is preferably positioned such that a capacitative impedance between the antenna and the cable (or more precisely the conductor) is substantially equal to or less than the impedance of free space, preferably significantly less than the free space, for example by a factor of 10. This helps to ensure efficient coupling of the microwave signal into the cable.

To achieve coupling of the microwave signal into the cable virtually any type of antenna may be employed but some antenna types are preferable. A monopole antenna, for example comprising a simple wire, provides a simple and cheap coupling; in embodiments such a monopole may be provided in a helical configuration, optionally encircling the cable conductor. Thus another aspect of the invention provides such an antenna.

In other arrangements the transmit (or receive) antenna may comprise a sheath partially or fully enclosing the circumference of the cable; the geometry of such a sheath may be varied to provide impedance matching for an antenna driver or receiver.

In yet another configuration the transmit (or receive) antenna comprises a magnetic loop antenna; in a particularly preferred arrangement a transformer in which the cable provides the secondary and the loop antenna the primary (vice-versa for a receiver antenna). Such a transformer may employ a ferrite loop around the cable to facilitate the transformer action. Spinel and garnet type ferrite materials are examples of suitable ferrites.

It is preferable that at least the transmit antenna is substantially resistively and capacitatively isolated from the at least one conductor of the cable, that is that no DC or low frequency (50/60Hz) current path is provided for safety reasons. (In practice this implies a maximum coupling capacitance of the order of 100nF).

We also describe a method of transmitting a radio frequency signal using a cable comprising at least one conductor, the method comprising: positioning a transmit antenna at a transmission point on said cable at a distance from said cable to couple said microwave signal into said cable; driving said transmit antenna with said signal to induce onto said cable a propagating wave to propagate along said cable.

We also describe a method of transmitting a radio frequency signal using a cable comprising a bundle of substantially electrically separate conductors, the method comprising: coupling said radio frequency signal to said conductors to drive said bundle of conductors with said rf signal such that each said conductor carries substantially the same signal; and driving said bundle of conductors with said rf signal to generate a propagating rf signal associated with said cable.

Thus the bundle of conductors may be driven with a common mode rf signal, that is so that the conductors carry signals with substantially similar phases and amptitudes (with respect to ground for the signal). The propagating signal associated with the cable may thus comprise a single-ended voltage signal. The ground with respect to which the rf signal is driven may have a low impedance capacitative coupling to a ground for the propagating wave, or may comprise a virtual ground or free space connection electromagnetically coupled to ground for the propagating wave, for example by means of a transmit antenna.

In other aspects the invention provides a transmitter, a receiver, and a transceiver configured to implement the above described methods.

Thus the invention further provides a radio frequency (rf) signal transmission system for transmitting a signal of at least 1 GHz guided by an electrical conductor, the system comprising: an electrical conductor for guiding said signal; a transmit antenna positioned at a distance from said conductor to couple said microwave signal into said cable, said antenna being substantially resistively isolated from said conductor; and an input, coupled to said transmit antenna, to receive said rf signal and to provide an rf drive corresponding to said signal to said antenna to launch a propagating wave corresponding to said signal on said electrical conductor, and wherein said propagating wave comprises a single-ended signal.

The rf signal transmission system may incorporate the electrical conductor which may comprise, for example, a portion of mains wiring for making connection to a domestic or industrial mains wiring circuit. This facilitates transmitter embodiments which simply plug in to a mains circuit. However in further, related aspects the invention also provides variants in which the signal transmission system is configured for coupling to a portion of mains wiring (often called power cable or power line wiring in the USA), and the electrical conductor may then be absent from this transmission system.

In embodiments the transmit antenna may be arranged to preferentially direct the propagating waves in one direction along the conductor, for example away from a socket into which the system has been connected, or away from a point of entry of the wiring into domestic or industrial premises. Such preferential directing may be achieved by connecting to and driving a monopole antenna at one end, but may be implemented more effectively using a pair of transmit antennas driven out of phase with respect to one another. The signal may then be arranged to propagate to preferentially towards the phase lagging antenna, with a distance between the two antennas chosen to provide substantially the same phase lag (for the propagating wave) as the drive phase lag between the antennas. The propagating wave in one direction (the direction opposite to the antenna drive phase lag direction) may then be substantially attenuated or cancelled.

We also describe an rf signal transmission system for transmitting an rf signal guided by one or more electrical conductors of an electrical cable, the rf signal having a frequency of 1GHz or greater, the system comprising: a signal transducer to couple said rf signal into said electrical cable; an input, coupled to said transducer to receive said rf signal and to provide an rf drive corresponding to said signal to said transducer to launch a propagating wave corresponding to said signal on said one or more conductors; and means for making an electrical connection at a frequency of said rf signal to an effective ground for said propagating wave, said effective ground having an indirect connection to earth for said propagating wave, said indirect connection having an impedance at an average frequency of said signal of substantially equal to or less than the impedance of free space.

The effective ground preferably lacks a direct connection to earth for the propagating wave (it will be understood that earth for the propagating wave may not normally be provided by an earth wire of a power cable which is carrying the propagating wave).
The indirect connection may, however, comprise a portion of power cabling with a choke to decouple a portion of cabling carrying the propagating wave from a portion of cabling used to provide an effective ground. At the frequencies of interest the effective ground, which in some embodiments may simply comprise a ground plane, for example on a printed circuit board, is, however, effectively coupled to earth for the propagating wave to facilitate providing the rf drive to generate the propagating wave.

We also describe an rf signal reception system for receiving a signal guided by one or more electrical conductors of an electrical cable, the signal having a frequency of greater than 1GHz, the system comprising: a receive antenna for receiving said guided signal; and means for making an electrical connection at a frequency of said rf signal to an effective ground for said guided signal, said effective ground having an indirect connection to earth for said propagating wave, said indirect connection having an impedance at an average frequency of said signal of substantially equal to or less than the impedance of free space.

In the above described systems and methods the (microwave) rf signal may comprise a UWB signal. The pulsed nature of such a signal facilitates recovering energy from the many multipath reflections which are encountered with propagating signals on power cable circuits, and techniques for the recovery of such energy are described in the Applicant's co-pending UK Patent Applications *(numbers to be determined)* filed on the same day as this application, which are hereby incorporated by reference. The skilled person will recognise, however, that the above described techniques may be used for communicating virtually any type of signal providing it has a high enough frequency (over 1 GHz). Multipath effects may be taken into account by the lower levels of the transmission protocols and/or a receiver correlator, for example by de-convolving a transmission channel impulse response.

The above described methods and systems thus find other applications in, for example, the communication of IEEE 802.11a signals. IEEE 802.11a employs OFDM modulation in the region of 5GHz, thus facilitating its transmission using mains cabling. However because of the relatively longer multipath reflection times which are observed in mains cabling as compared with free space transmission it is preferable that the protocol is modified to provide a longer inter-symbol guard interval, or cyclic prefix to take account of such reflections. For example, in some mains wiring circuits multipath components may be present after over 100ns from an initially received signal. Thus the current 802.11a radio protocol guard interval of 0.8µs may be increased, for example, to 1 µs or more. This can be accomplished by a change in the transmission protocol, although there is some reduction in the maximum data rate. For example, the OFDM implementation of 802.11 uses 48 orthogonal carriers together transmitting symbols of 3.2µs with a 0.8µs guard interval, giving a 4µs symbol period. If the guard interval were lengthened to, for example 1.8µs, the symbol period would increase to 5µs, reducing the symbol rate by 20%.

More generally in OFDM communication systems a series of modulation data symbols such as QAM symbols is operated on by an inverse (discrete) fourier transform (IFT) matrix to provide a set of values which when converted to an analog signal by a digital-to-analog converter will define a waveform which comprises a set of orthogonal carriers modulated by the modulation data symbols (an OFDM symbol). A cyclic extension, more particularly a cyclic prefix, is added in the time domain by, for example, copying some of the final samples of the I(D)FT output to the start of the OFDM symbol. The cyclic prefix (or suffix) extends the OFDM symbol to provide a guard interval, with the aim of substantially removing inter-symbol interference or multipath delays of less than this guard imterval (when decoding this guard interval is effectively ignored). Thus it can be seen that implementing any of a range of conventional OFDM communication systems using the above described systems and techniques, (even, for example, digital television-type communications protocols), the system or technique may be adapted to better suit a power cable environment simply by extending the cyclic prefix.

We also describe a method of distributing an ultrawideband (UWB) communications signal through a building, the method comprising generating a UWB signal; and coupling the UWB signal to at least one electrical conductor of a mains power supply circuit of the building to distribute the UWB signal.

Distributing the UWB signal over the mains power supply of a building such as a domestic dwelling, for example a house or flat, and potentially enables increased UWB communication range and/or reduced power for a desired range. Furthermore because UWB signals propagate relatively poorly through building walls the method potentially enables the use of higher average UWB radiated power without a correspondingly increased risk of causing interference.

A single UWB transmitter may be employed, for example at a point of mains ingress into the building but the method preferably comprises generating a plurality of UWB signals at a plurality of UWB transmitters and coupling these onto the mains supply at different points within the building. It is further preferable that a common timing is established between at least a subset of the UWB signals, for example between all the transmitters within a room. This helps to reduce interference and facilitates multiple access techniques such as TDMA. A common or consensus clock may be established between all transmitters in the building using the mains supply as a shared communications medium or, alternatively, clusters of transmitters may be established with a common or consensus clock and CDMA techniques used to reduce interference between such clusters. (It will be appreciated that establishing a common timing does not require that transmitters transmit impulses at the same time).

One or more of the centre frequency and bandwidth of the UWB signal may be adjusted to suppress interference from other devices connected to the mains supply in the building, such as electric motors. Additionally or alternatively timing of UWB pulses may be varied to reduce the vulnerability of the UWB signals to interference. Similar techniques may be employed, if necessary, to reduce interference caused by the UWB signal or signals.

We also describe a data communications network, such as a packet data communications network, configured to use the above-described method.

We also describe apparatus for distributing an ultrawideband (UWB) communications signal through a building, the apparatus comprising means for generating a UWB signal, and means for coupling the UWB signal to at least one electrical conductor of a mains power supply circuit of the building to distribute the UWB signal.

The above-described apparatus may be incorporated in a consumer electronics device, in particular a mains powered consumer electronics device.

These and other aspects of the invention will now be further described, by way of example only, with reference to the accompanying figures in which:
Figures 1a to 1h show, respectively, a typical UWB transceiver; a first example of a known carrier-based UWB transmitter, a variant of this first example transmitter, a second example of a known carrier-based UWB transmitter, a third example of a known UWB transmitter, a receiver for the third example transmitter, a known UWB transceiver employing spread spectrum techniques, and a driver circuit for a large-current radiator antenna;
Figures 2a to 2h show examples of UWB waveforms;
Figures 3a to 3c show, respectively, a UWB home wireless network, a ring mains based UWB home network, an alternative mains power distribution wiring configuration, a first cable-based repeater system, and an alternative cable-based repeater system;
Figure 4 shows some examples of mains power cables;
Figures 5a and 5b show examples of transmit antennas for coupling to power cabling;
Figures 6a to 6c show electronic models of the antennas of figures 5a and 5b;
Figure 7 diagrammatically illustrates input impedances of antennas of varying lengths;
Figures 8a and 8b illustrate alternative forms of transmit antenna;
Figures 9a and 9b show examples of magnetic loop antennas;
Figures 10a and 10b show, respectively, vertical cross-section and plan views of a broadband coupling antenna;
Figures 11 a and 11b show examples of directional coupling antenna arrangements;
Figure 12 shows an example of a ring main including cable - coupled transmitters and receivers;
Figures 13a and b show, respectively, a signal transmission system and a local ground plane for the system of figure 13a; and
Figure 14 shows an example of a signal reception system.

Referring now to Figure 3a, this shows a UWB home wireless network 300 employing mains power supply wiring as a transmission medium. A home 302 has an incoming mains power supply 304 coupled via a fuse box 306 to a ring or spur-based mains power distribution circuit 308 with a plurality of mains power sockets 310. One or more consumer electronics devices (CEDs) are plugged into each of the sockets, in the illustrated example these including a set top box (STB) 312, a DVD player 314, a TV or computer monitor 316, a laptop computer 318, a printer 320, an audio system 322, and a satellite receiver 324. One or more of these devices may be equipped with a UWB transmitter, receiver, or transceiver for communicating with others of the devices or with a controller 326 connected to the fuse box 306. These UWB devices are rf coupled to mains circuit 308 via power sockets 310 and, in the case of controller 326, fuse box 306. Additional coupling such as coupling 328 of controller 326 may also optionally be employed. Fuse box 306 may incorporate a UWB filter to reduce external interference and to limit egress of UWB transmissions from house 302.

Free space transmitted power falls off with distance to the power of -2, but through-wall transmissions typically fall off faster, with an exponent of between -3 and -4. Coupling the UWB transmitters of a consumer electronic device to the mains circuit facilitates UWB-based networking between the devices by providing improved propagation, for example between devices separated by a wall. For example, UWB propagation ranges of greater than 10m may be achieved in mains wiring.

The use of UWB communications particularly facilitates high bit rate data links such as audio, and particularly video data links. Devices such as personal digital assistants (PDA) 330 and camera 332 which are not directly connected to the mains circuit 308 may communicate with a mains powered and UWB-enabled device such as audio system 322, for example via a Bluetooth link 334 and thus obtain access to mains cabling-facilitated UWB transmitter and/or receiver equipment.

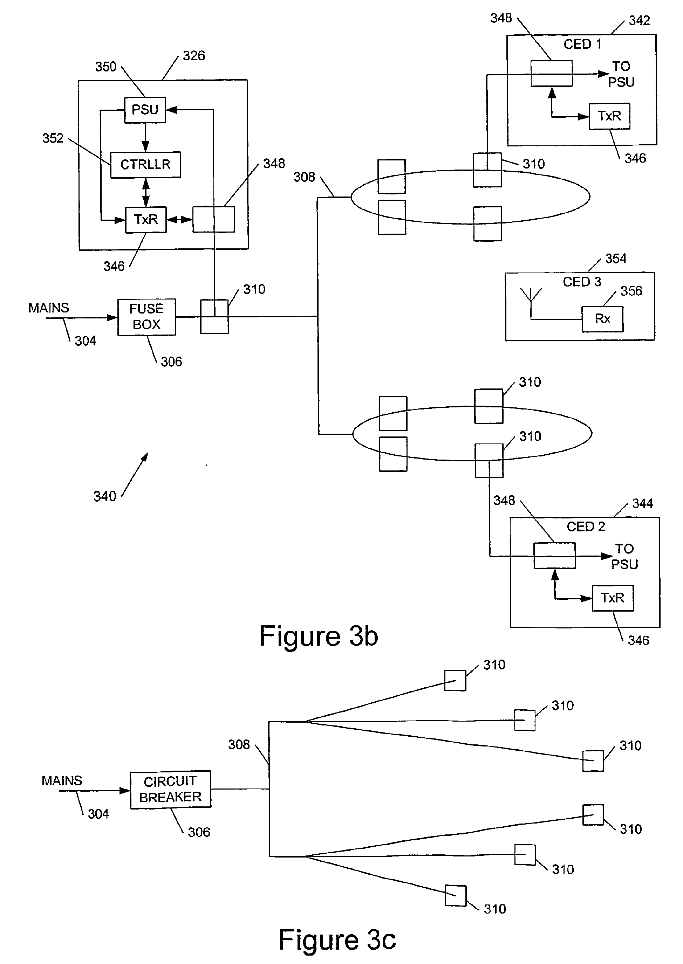

Referring now to Figure 3b, this shows an example of a ring mains based UWB home network 340, in which like elements to those of Figure 3a are indicated by like reference numerals.

In Figure 3b two mains powered consumer electronic devices 342, 344 are shown each having a mains input connected to an internal power supply unit for supplying internal DC power to elements of the device and also to a UWB transceiver 346 coupled to the mains input by coupling means 348. The controller 326 is similar, and includes the mains driven power supply 350 and a network controller 352 to, for example, to control time and/or frequency domain access to a part or all of the network for the transmitters of transceivers 346.

A battery powered consumer electronics device 354 includes a UWB receiver 356 and, optionally, a UWB transmitter (not shown). Device 354 can receive UWB signals radiated from mains power lines and, since it lacks direct access to mains wiring-facilitated UWB signal propagation, it may transmit via an intermediary such as one of devices 342, 344 or controller 326. Alternatively UWB transmissions from device 354 may couple wirelessly into the mains wiring.

Figure 3c shows an alternative mains power distribution wiring configuration to which the techniques described herein can also be applied. In Figure 3c like elements to those of Figures 3b and 3a are indicated by like reference numerals.

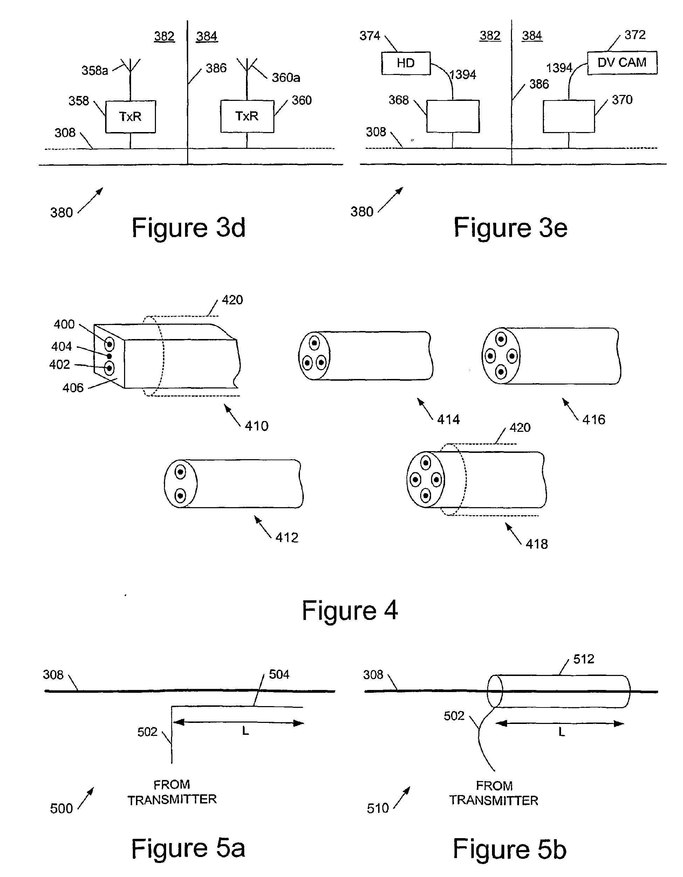

Figure 3d shows a portion of a building 380 comprising first and second rooms 382, 384 separated by a foil-lined wall 386. A pair of UWB transceivers 358, 360 is provided for transporting a signal, preferably bi-directionally, from one of the rooms to another through wall 386 (which significantly attenuates free-space electromagnetic waves at the frequencies of interest). In a preferred arrangement each of devices 358, 360 comprises a receiver to receive UWB signals guided by power cable 308 and to retransmit these signals into the air by means of a respective antenna 358a, 360a. Each device 358, 360 preferably also includes a receiver to receive signals from antennas 358a, 360a and to couple these onto power cable 308 to allow off air signals to be more efficiently transported from one room to the next. Thus transceivers 358, 360 may act as wireless repeaters, coupling into the air channel on either side of wall 356 via the mains power cable between them. Since these devices do not need to encode or decode the signal, or, in embodiments, do any significant processing, devices 358, 360 may essentially comprise amplifiers.

Figure 3e shows an arrangement similar to that of figure 3d in which a pair of mains powered coupled repeaters 368, 370 act as repeaters for IEEE1394 or "Fire Wire" (trademark) signals to and from FireWire interfaces of, in this example, a digital video camera 372 and a hard disk (or video recorder) 374. In this way the IEEE1394 bus may be extended into home and business networking environments. Optionally a serial bus bridge standard such as IEEE1394.1 may be employed. The skilled person will recognise that other locally-connected islands may be linked using other power cable transceivers or repeaters in a similar manner.

Figure 4 shows some examples of power cables employed for mains wiring, previously denoted by reference numeral 308. Such cabling generally comprises a pair of conductors 400, 402 for respective live and neutral connections and, optionally, a third conductor 404 to provide an earth connection. The live and neutral conductors are generally double insulated, that is insulated by both an insulating sheath and an insulating cable sheath 406 within which all the conductors are mounted. Flat section wiring 410 is typical of a ring mains circuit; two 412 and three 414 core mains flex is often used for connections to appliances; four core cable 416 may be employed for two way lighting circuits and larger four core cable 418 may be employed for three-phase supplies in either domestic or industrial premises. Optionally such cable may be enclosed in conduit 420 shown in this example for ring mains cable 410 and three phase supply cable 418. In what follows all these different cable types including the conduit (where fitted) are denoted by a single reference numeral 308.

Other types of cable may also be employed to guide high frequency rf signals as described later. Some of these types of cable include MICC cable (for example available from Pyrotenax Cables Limited, UK), coaxial cable, bell wire, multicore cable, CAT5 cable, telephone cable and alarm cable. Alarm system cabling may be employed, for example, to retrofit video cameras to existing alarm systems, the video cameras communicating over the alarm system cabling using techniques along the lines described below.

Referring now to figure 5 a, this shows a simple embodiment of a transmit antenna coupling 500 to a mains cable 308. A drive output line 502 from a transmitter providing a signal at a frequency of 1 GHz or greater drives a monopole antenna 504 having, in this example, a length *l* approximately equal to half the average wavelength of the signal from the transmitter (in the case of a UWB transmitter taking as an average a frequency at the centre of a UWB band. (In other embodiments other lengths may be employed, for example a quarter-wave monopole). The coupling 500 of figure 5a has monopole 504 driven from one end which provides some degree of directionality to the coupling, in figure 5 signals travelling down the antenna from left to right and thus tending to induce a propagating wave travelling from left to right in mains cable 308.

In operation broadly speaking the microwave signal from the transmitter radiates from the monopole antenna 504 and couples to the mains cable 308 as described further below inducing a surface travelling wave on the mains cable in a somewhat analogous manner to a wave on a hosepipe shaken at one end. The propagating wave is in fact referenced to ground but in this case ground for the propagating wave comprises the surroundings or environment of the mains cable 308, in particular those parts of the environment which have a lower electrical resistance than other parts (although not restricted to those materials which are normally considered good electrical conductors). The conductors of the mains cable 308 carry a substantially common mode signal - that is so far as a propagating wave is concerned they look like (or approximate to) a single conductor. Where mains cable 308 comprises, for example, three conductors in a metal conduit the conduit becomes, in effect, a fourth conductor.

Referring now to figure 5b this shows an improved coupling device along similar lines to that shown in figure 5a. In figure 5b, however, the transmitter drive output 502 is connected to (as illustrated) one end of a conductive sheath 512 around mains cable 308 (inside or outside any conduit which may be present). Sheath 512 is preferably formed from a good conductor such as metal and may comprise metal plate and/or metal braid or, more simply, adhesive copper tape. It is preferable that sheath 512 is insulated from mains cable 308 (as would normally be the case), and it is further preferable that the sheath is positioned as close to mains cable 308 as practicable although the sheath need not fully enclose the cable circumferentially as shown. Suitable materials for sheath 512 include aluminium, copper, gold and silver.

The inside diameter of sheath 512 is preferably sized to fit the mains cable, and is typically of the order of one centimetre; the length *l* of sheath 512 may be chosen in the same way as described above with reference to figure 5a or monopole antenna 504, and depends upon the wavelength of the transmitted signal, but is typically again of the order of one centimetre. The length of sheath 512 and its spacing from the cable depends upon the capacitative coupling needed and, broadly speaking, there should be enough capacitance between sheath 512 and cable 308 for good electrical coupling at the frequency or frequencies of interest (in this case 1 GHz or greater) although there is no special advantage to providing more capacitance than is necessary for good coupling. As the skilled person will understand the capacitance depends upon the diameter of sheath 512, the length of sheath 512 and also upon the material from which cable 308 is made, in particular the material of the insulation. However, as described further below, the length *l* may also be varied to vary the inductance and/or impedance of the antenna (when considering the effect of standing/travelling waves on the antenna).

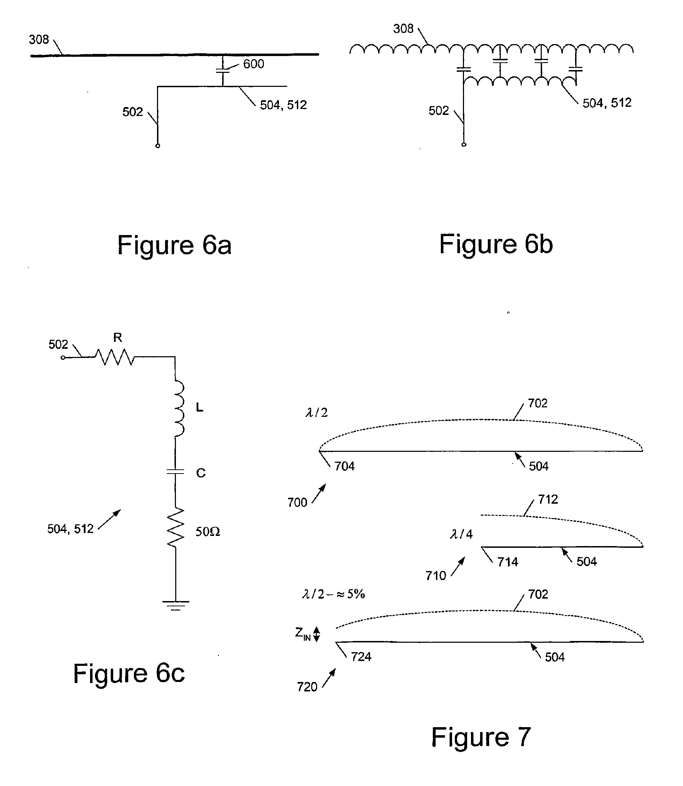

Figure 6a shows a simplified electrical model of the antennas of figures 5a and 5b in which the coupling between the antenna 504, 512 and cable 308 is simplified to a capacitance 600. For good electrical coupling it is desirable that the capacitative impedance at the average drive frequency (or preferably at the minimum used transmitter output frequency), Z_{C} is less than, and preferably substantially less than, the impedance of free space, Z₀, which is approximately equal to 377 ohms (where Z_{C} = 1/(2πfC) where f is the frequency of operation). This is because mains cable 308, and in particular an electromagnetic wave on the cable, sees a free space impedance of approximately 300 ohms and thus to avoid dropping too much voltage across the coupling capacitance 600 the impedance of this capacitance is preferably at least ten times smaller than the free space impedance.

Figure 6b illustrates a more accurate electrical model 610 of the antenna-cable systems of figure 5a using distributed components in which the mains cable and antenna 504, 512 are shown as having distributed inductance and in which the coupling capacitance is also distributed. Figure 6c illustrates a further model of the antenna-cable system in which the resistance of the antenna (generally small) is denoted by *R*, the inductance of the antenna by *L* and the capacitance of the coupling by *C* (for the purposes of modelling the antenna is shown driving a 50 ohm load). The values of *L* and *C* depend upon, among other things, the length of the antenna. For a quarter wave antenna at 6 GHz example values are *L* = 12 nH and *C* = 46 fF; the Q of the circuit at resonance is given by either the inductive or capacitative impedance (these are equal at resonance) divided by the loss impedance (50ohms in this case). Referring next to figure 7 this illustrates the effect of varying monopole antenna length (in terms of wavelength of the transmitted signal) on input impedance of the antenna. Example 700 shows a half wave antenna with dashed line 702 illustrating the current distribution; it can be seen that since the current at one end 704 is substantially zero driving the antenna from this end corresponds to driving an open circuit and thus the input impedance is high. Example 710 shows a quarter wave antenna with current distribution 712; it can be seen that driving the antenna at end 714 approximates to driving into a short circuit. Example 720 shows the antenna of example 700 with the length shortened by a small fraction, say approximately 5%, from the half wavelength length. The current distribution 722 shows that by varying the exact length of the antenna the input impedance at end 724 can be varied as desired, for example to achieve an input impedance of 75 ohms.

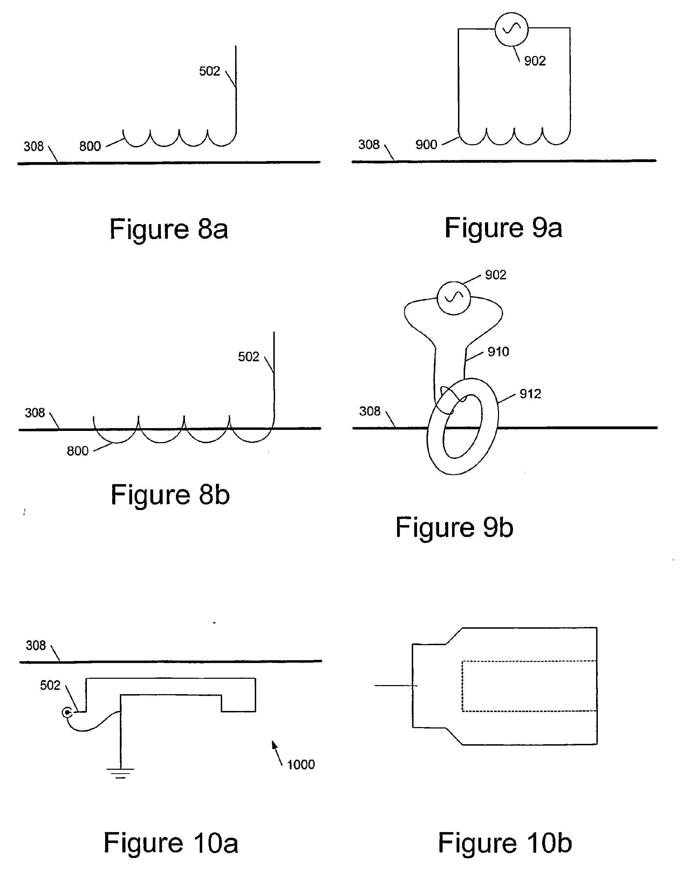

Referring next to figures 8a and 8b, these show an example of a helical monopole antenna 800, in the case of figure 8a adjacent mains cable 308, and in the case of figure 8b encircling cable 308. Such antenna configurations provide additional inductance which (referring to figure 6b) can in effect slow propagation of a transmitted signal along the antenna from antenna drive line 502 and thus can be used, for example, to facilitate directional coupling.

Figures 9a and 9b diagrammatically illustrate examples of magnetic loop coupling to mains cable 308. In figure 9a a magnetic loop antenna 900 comprises one or more turns of wire adjacent mains cable 308 and is driven by a transmitter at the frequency of interest illustrated diagrammatically by source 902. In the arrangement of figure 9a magnetic loop antenna 900 effectively forms one winding of a transformer, the other winding of which has a single turn comprising mains cable 308.

Figure 9b shows a similar but improved arrangement in which a magnetic loop 910 is formed around a ferrite ring 912 through which passes mains cable 308. This improves the magnetic coupling of antenna 910 to the mains cable. In other arrangements ferrite 912 need not comprise a complete ring about mains cable 308. A suitable ferrite material for use at frequencies over 1 GHz is a Spinel or Garnet type material.

In the antennas of figures 9a and 9b the magnetic loop antenna in effect attempts to cause a current to flow in mains cable 308, although if no current in fact flows a voltage is generated on the cable. The coupling ratio depends upon the number of turns of the magnetic loop antenna 910, mains cable 308 counting as a single turn so that, for example, a ratio of 10:1 1 results in a current *I* in magnetic loop 900, 910 attempting to cause flow of a current 10*I* in mains cable 308.

Figure 10a illustrates use of a broadband antenna 1000 such as the SMT-3TO10M from SkyCross Corp, Florida USA. This antenna is intended for broadband transmission into space but the inventors have recognised that, following the above described methods, it may be employed for coupling a broadband signal such as a UWB signal into mains cable 308. The broadband antenna is designed using SkyCross' patented Meander Line Antenna technology and is, in effect, a form of folded dipole antenna. As previously the antenna 1000 is preferably positioned near or adjacent mains cable 308.

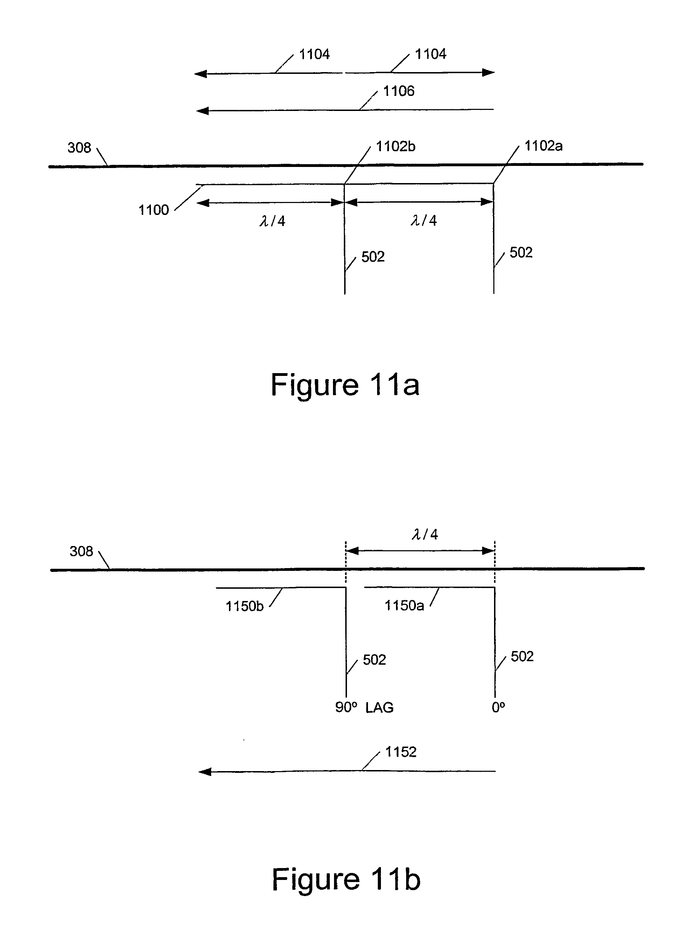

Figure 11 a illustrates a monopole antenna 1100 to which connections may be made at either one end 1102a or in the middle 1102b to provide directional effects. When driven in the middle the antenna presents a low input impedance and generates waves 1104 propagating in two opposite directions; when driven at one end 1102a the antenna presents a high input impedance and generates a wave which preferentially travels in one direction 1106, which may be ascribed to the antenna's self-inductance. Such directional propagation is useful when, for example, it is desired to send a signal away from an electric socket at which a transmitter is connected, or away from a junction box or in certain mains wiring configurations such as a star wired mains circuit as illustrated in figure 3c.

Figure 11b shows a second example of a transmit antenna configuration which may be employed to launch propagating waves along mains cable 308 preferentially in one direction. In figure 11b a pair of monopole antennas 1150a, b are driven by a single transmitter signal at zero degrees phase lag and 90 degrees phase lag respectively. The antennas 1150a, b are each a little less than a quarter wavelength in length and are spaced apart along mains cable 308 by a distance equal to a quarter wavelength of the average transmitter frequency of the wave propagating in the mains cable 308. As the antennas 1150a, b are driven in quadrature a wave propagating in direction 1152 generated by antenna 1150 is reinforced by the drive from antenna 1150b but a wave travelling in the opposite direction to direction 1152 from antenna 1150b is cancelled by the drive from antenna 1150a. Driving the antennas in quadrature and spacing them by a quarter of the wavelength of the average transmission frequency in the mains cable gives a special case where complete cancellation occurs, and the signal is propagated substantially in one direction along the mains cable. It will be recognised that other phase lags and spacings may be employed which give poorer directionality but preferably the spacing should be equal to the phase lag in distance terms, that is as a fraction of the wavelength of the transmitted signal in the mains cable.

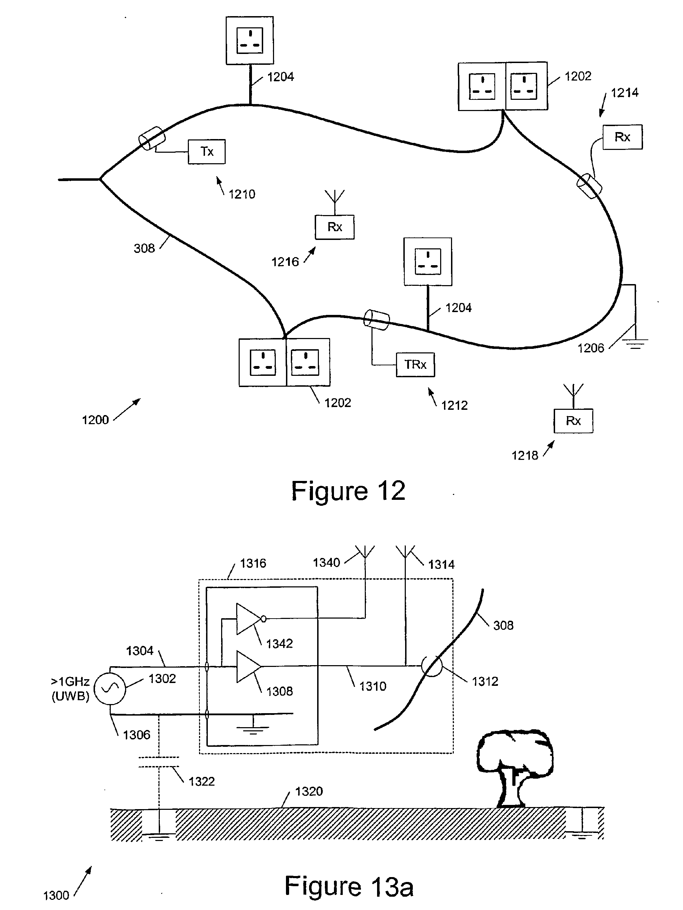

Figure 12 illustrates one example of a ring main circuit 1200 having a plurality of sockets 1202 and spurs 1204 and, as illustrated, an earth connection 1206 at one point for an earth wire within the cable. A transmitter 1210 is coupled onto the ring main 1200 at one point; a transceiver 1212 is coupled onto the ring main at another point; a receiver 1214 is coupled onto the ring main at a third point and other receivers 1216, 1218 receive signals radiated by or at least present in the vicinity of the ring main 1200. The sockets 1202, spurs 1204 and earth connection 1206 form impedance discontinuities within the ring main causing reflections giving rise to a plurality of multipath components, notches in the frequency response of the circuit and the like. In a ring main or spur connection a signal may reflect many times before decaying and thus the multipath components maybe of long duration.

As diagrammatically shown in figure 12 the transmit and receive taps are similar and there may be a plurality of transmit and receive taps on a single mains cable. As an electromagnetic field generated by propagating waves on the cable also exists on the cable ground a signal propagating on the cable may also be received by receivers 1216, 1218 which are not directly adjacent to the cable but merely in a space between the cable and some surrounding ground.

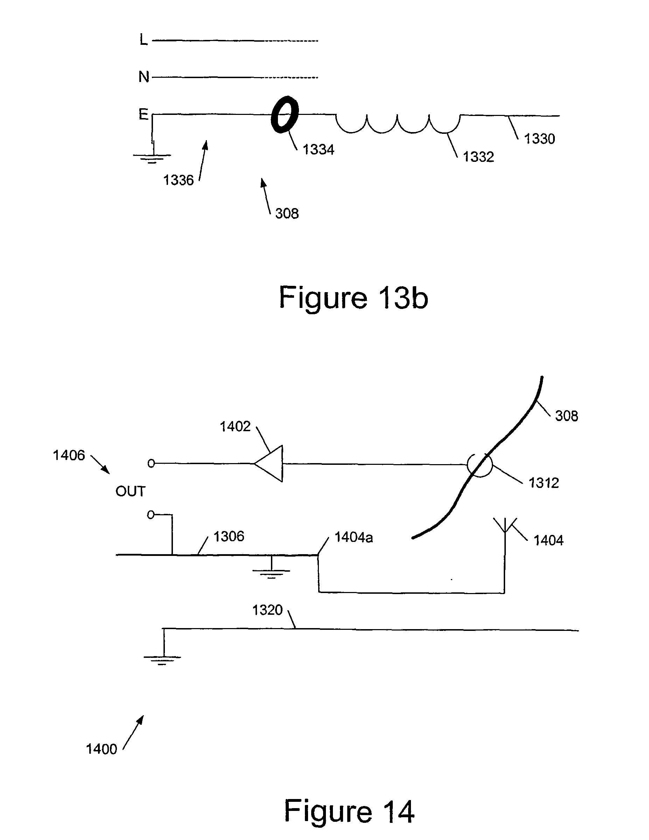

Referring next to figure 13a, this shows a schematic diagram of a transmitter 1300 for launching a propagating microwave signal onto a mains cable 308. Transmitter 1300 has an input from a source 1302 such as a conventional, for example OFDM transmitter, or a UWB source. Source 1302 is connected between an input terminal 1304 and a local ground plane 1306. This local ground plane may comprise, for example, 0 volts and power lines of a printed circuit board or an other substrate on which the transmitter is formed but will not generally comprise mains earth (but see the description of figure 13b below). Transmitter 1300 includes an antenna driver 1308 coupled to input 1304 and providing a drive output 1310 to a mains cable coupling device 1312 such as antennas 504, 512 of figure 5, and antennas 800 of figure 8, antennas 900, 912 of figure 9, antenna 1000 of figure 10, or antenna configurations 1100, 1150 of figure 11. Optionally a conventional transmit antenna 1314 may also be coupled to the output of drive 1308 for radiating into free space. Mains cable coupling device 1312 may be included in a housing 1316 of transmitter 1300 together with a portion of mains wiring connecting to mains cable 308, for example to provide a plug-in transmitter.
The connection of local ground 1306 to a ground for a propagating wave on mains cable 308 will next be described. A propagating wave of cable 308 has a ground comprising the local environment of the mains cable here illustrated by "actual" earth 1320 although in practice in a building this earth will generally be formed of various of the more conducting portions of the building. Local ground plane 1306 may then, at the frequencies of interest, be arranged to have a relatively low impedance coupling to earth or ground 1320 by arranging for a coupling capacitance 1322 between local ground 1306 and earth 1320 to be sufficiently large. It should be mentioned here that capacitance 1322 will not generally be a discrete component is formed by the capacitance of local ground plane 1306 and the environment in which the transmitter is located. Because the frequencies are high, greater than 1GHz a relatively low capacitance can still provide a good, that is low impedance, coupling to earth 1320. It is preferable that the impedance of capacitance 1322 is low relative to the impedance of free space at the frequencies of interest because the transmitter is driving mains cable 308 into a free space impedance-to-ground there is, in effect, an impedance of approximately 300ohms between cable 308 and ground 1320. To achieve such coupling the ground plane should preferably have one or more dimensions which are comparable with an average wavelength of the transmitter at the frequency or frequencies employed, that is 1GHz a 30cm ground plane is desirable and at 10GHz a 3cm ground plane is desirable (although in some circumstances a half or quarter wave plane may be adequate).

Figure 13b shows one conductor of a mains cable, in this example the earth conductor, may be employed to provide a larger ground plane. One portion 1330 of the earth conductor is substantially isolated at the frequencies of interest by a high impedance choke comprising, in this example, an inductor 1332 and ferrite bead 1334. This allows another portion 1336 of mains cable 308 to be used to carry the propagating wave.

Figure 13a illustrates a further technique which may be employed to a virtual ground for propagating wave on cable 308. This comprises a differential drive to free space comprising a transmit antenna 1340 coupled to the output of an inverting driver 1342 coupled to input 1304. Thus transmit antenna 1340 is driven with an inverted or differential version of the input signal so that the ground for the propagating wave cable 308 in effect comprises a connection to free space made by antenna 1340. Antenna 1340 may comprise any conventional antenna, in one embodiment a quarter wave monopole. Either this virtual ground or a ground plane coupled to earth 1320, or both may be employed in transmitter 1300. Also, as previously mentioned, transmitter 1300 may simultaneously transmit through air by means of antenna 1340 in and along cable 308 to allow a receiver to receive the free space transmission when available and a signal guided by cable 308 when out of direct range.

Broadly speaking a receiver to receive a signal guided by cable 308 may be constructed by substituting a receiver front end for one or both of antenna drivers 1308, 1342. Figure 14 illustrates an alternative receiver 1400 embodiments in which like elements of those in figure 13a are indicated by like reference numerals. Thus the receiver has a coupling device 1312 providing an input into a receiver front end 1402 and a ground plane 1306, which may either be capacitatively coupled to earth or ground for a propagating wave on cable 308 or which may be coupled to free space by means of a receive antenna 1404 such as a quarter wave monopole (or both these techniques may be employed). Where a quarter wave monopole is employed point 1404a on local ground plane 1306 is a relatively low impedance. The receiver has an output 1406 which is taken from between the output of receiver front end 1402 and ground plane 1306.

No doubt many other effective alternatives will occur to the skilled person. For example applications of the above-described techniques are not limited to domestic buildings but may also be employed in office accommodation and industrial buildings.
Similarly, although the techniques have been described with reference to the single-phase supply usually found in domestic dwellings corresponding techniques may also be employed with the three-phase circuits more commonly found in industry.

In alternatives to the above described methods and apparatus the mains power cable-based (UWB) signal distribution may be replaced (or supplemented) by (UWB) signal distribution based upon an alternative building wiring system. Thus instead of (or additionally to) the one or two electrical conductors of a mains power supply, one or two conductors of a computer networking cable, such as a Cat 5 cable, or one or two conductors of a telephone cable may be employed to distribute the (UWB) signal. For the reasons already mentioned, the low-power ultra-wideband pulsed nature of the signal reduces the likelihood of interference to existing signals transported on these cables.

It will be understood that the invention is not limited to the described embodiments and encompasses modifications apparent to those skilled in the art.

## Claims

1. A method of communicating an ultrawideband (UWB) microwave signal having a frequency of 1 GHz or higher using a cable (308) comprising at least one conductor, the method comprising:
positioning a transmit antenna (504; 512) at a transmission point on said cable at a distance from said cable to couple said microwave signal into said cable;
driving said transmit antenna with said microwave signal to induce onto said cable a propagating wave to propagate along said cable;
positioning a receive antenna (504; 512) to receive an electromagnetic signal generated by said propagating wave;
receiving a version of said microwave signal using said receive antenna; and
wherein said propagating wave comprises a single-ended signal.

2. A method as claimed in claim 1 wherein said distance is equal to or less than an average free space wavelength of said microwave signal.

3. A method as claimed in claim 1 wherein said distance is such that a capacitative impedance between said antenna and said cable is less than the impedance of free space.

4. A method as claimed in any preceding claim wherein one of said transmit antenna and said receive antenna comprises a monopole antenna.

5. A method as claimed in any preceding claim wherein one of said transmit antenna and said receive antenna comprises a magnetic loop antenna.

6. A method as claimed in any one of claims 1 to 5 wherein at least one of said transmit antenna and said receive antenna is substantially resistively isolated from said at least one conductor.

7. A method as claimed in any preceding claim wherein said driving comprises driving said transmit antenna with respect to a ground.

8. A method as claimed in claim 7 wherein said ground comprises a connection to free space.

9. A method as claimed in claim 7 wherein said ground comprises a local ground having a capacitative coupling to a ground for said propagating wave.

10. A method as claimed in claim 9 wherein said ground comprises a portion of power wiring.

11. A method as claimed in any preceding claim wherein driving comprises inducing said propagating wave to propagate preferentially in one direction along said cable.

12. A method as claimed in any preceding claim wherein said cable comprises and alternating current power cable.

13. A method as claimed in any preceding claim where said cable comprises an alternating current power cable.

14. An ultrawideband (UWB) radio frequency (rf) signal transmission system (1300) for transmitting a signal of at least 1GHz guided by an electrical conductor, the system comprising:
an electrical conductor (308) for guiding said signal;
a transmit antenna (504; 512) positioned at a distance from said conductor to couple said microwave signal into said cable, said antenna being substantially resistively isolated from said conductor; and
an input (1304), coupled to said transmit antenna, to receive said rf signal and to provide an rf drive corresponding to said signal to said antenna to launch a propagating wave corresponding to said signal on said electrical conductor, and
wherein said propagating wave comprises a single-ended voltage.

15. A system as claimed in claim 14 wherein said distance is less than a wavelength of said rf signal from said electrical conductor.

16. A system as claimed in claim 14 wherein said distance is such that a capacitative impedance between said antenna and said cable is less than the impedance of free space.

17. A signal transmission system as claimed in claim 14, 15 or 16 wherein said rf drive is referenced to a reference level connection.

18. A signal transmission system as claimed in claim 17 wherein said reference level connection comprises a ground for said transmission system coupled to a ground for said propagating wave.

19. A signal transmission system as claimed in claim 18 wherein said coupling between said transmission system ground and said ground for said propagating wave has an impedance substantially equal to or less than the impedance of free space.

20. A signal transmission system as claimed in claim 17, 18 or 19 wherein said reference level connection comprises a portion of power wiring for said transmission system which, for said rf signal, is substantially isolated, from said electrical conductor.

21. A signal transmission system as claimed in claim 17, 18 or 19 wherein said reference level connection comprises a connection to free space.

22. A signal transmission system as claimed in claim 21 wherein said connection to free space comprises a second antenna (1340) and a second antenna driver (1342) to drive said second antenna with an inverted version of said of signal.

23. A signal transmission system as claimed in any one of claims 14 to 22 wherein said transmit antenna comprises a pair of transmit antennas (1150 a, b), the system further comprising a transmit antenna driver configured to drive said pair of transmit antennas such that a signal transmitted from one of said pair of antennas has a phase delay with respect to a signal transmitted from other of said pair of antennas.

24. A signal transmission system as claimed in any one of claims 14 to 23 wherein said transmit antenna comprises a monopole antenna, a magnetic antenna, a broadband antenna, or a helical conductor.

25. A signal transmission system as claimed in claim 24 wherein said transmit antenna is positioned such that a capacitative impedance between said transmit antenna and said conductor is less than the impedance of free space.

26. A signal transmission system as claimed in any one of claims 14 to 25 wherein said conductor comprises one conductor of an electrical power cable or a conductor configured for connection to an electrical power cable.

## Patentansprüche

1. Verfahren zur Übermittlung eines Ultrabreitband-(UWB-)Mikrowellensignals mit einer Frequenz von 1 GHz oder höher unter Verwendung eines Kabels (308) der mindestens einen Leiter umfasst, wobei das Verfahren die folgenden Schritte umfasst:
Positionieren einer Sendeantenne (504; 512) an einem Sendepunkt an dem Kabel in einem Abstand von dem Kabel, um das Mikrowellensignal in das Kabel einzukoppeln;
Ansteuern der Sendeantenne mit dem Mikrowellensignal, um auf dem Kabel eine sich ausbreitende Welle zur Ausbreitung entlang des Kabels zu induzieren;
Positionieren einer Empfangsantenne (504; 512), um ein durch die sich ausbreitende Welle erzeugtes elektromagnetisches Signal zu empfangen;
Empfangen einer Version des Mikrowellensignals unter Verwendung der Empfangsantenne; und
wobei die sich ausbreitende Welle ein Eintaktsignal umfasst.

2. Verfahren nach Anspruch 1, wobei der Abstand kleiner oder gleich einer durchschnittlichen Freiraum-Wellenlänge des Mikrowellensignals ist.

3. Verfahren nach Anspruch 1, wobei der Abstand derartig ist, daß eine kapazitive Impedanz zwischen der Antenne und dem Kabel kleiner als die Freiraum-Impedanz ist.

4. Verfahren nach einem der vorhergehenden Ansprüche, wobei entweder die Sendeantenne oder die Empfangsantenne eine Monopolantenne umfasst.

5. Verfahren nach einem der vorhergehenden Ansprüche, wobei entweder die Sendeantenne oder die Empfangsantenne eine Magnetschleifenantenne umfasst.

6. Verfahren nach einem der Ansprüche 1 bis 5, wobei mindestens die Sendeantenne oder die Empfangsantenne von dem mindestens einen Leiter im Wesentlichen galvanisch getrennt ist.

7. Verfahren nach einem der vorhergehenden Ansprüche, wobei das Ansteuern den Schritt umfasst: Ansteuern der Sendeantenne in bezug auf eine Masse.

8. Verfahren nach Anspruch 7, wobei die Masse eine Verbindung zum freien Raum umfasst.

9. Verfahren nach Anspruch 7, wobei die Masse eine lokale Masse mit einer kapazitiven Kopplung mit einer Masse für die sich ausbreitende Welle umfasst.

10. Verfahren nach Anspruch 9, wobei die Masse einen Stromnetzverdrahtungsabschnitt umfasst.

11. Verfahren nach einem der vorhergehenden Ansprüche, wobei das Ansteuern den Schritt umfasst: Induzieren der sich ausbreitenden Welle zur vorzugsweisen Ausbreitung in einer Richtung entlang des Kabels.

12. Verfahren nach einem der vorhergehenden Ansprüche, wobei das Kabel ein Wechselstromnetzkabel umfasst.

13. Verfahren nach einem der vorhergehenden Ansprüche, wobei das Kabel ein Wechselstromnetzkabel umfasst.

14. Ultrabreitband-(UWB-)Funkfrequenz-(RF-)Signalübertragungssystem (1300) zur Übertragung eines Signals von mindestens 1 GHz, das durch einen elektrischen Leiter geführt wird, wobei das System folgendes umfasst:
einen elektrischen Leiter (308) zum Führen des Signals;
eine Sendeantenne (504; 512), die in einem Abstand von dem Leiter positioniert ist, um das Mikrowellensignal in das Kabel einzukoppeln, wobei die Antenne von dem Leiter im Wesentlichen galvanisch getrennt ist; und
einen Eingang (1304), der mit der Sendeantenne gekoppelt ist, um das RF-Signal zu empfangen und um eine dem Signal entsprechende RF-Ansteuerung an die Antenne zu übergeben, um eine dem Signal entsprechende, sich ausbreitende Welle auf dem elektrischen Leiter auszulösen; und
wobei die sich ausbreitende Welle eine Eintaktspannung umfasst.

15. System nach Anspruch 14, wobei der Abstand von dem elektrischen Leiter kleiner als eine Wellenlänge des RF-Signals ist.

16. System nach Anspruch 14, wobei der Abstand derartig ist, daß eine kapazitive Impedanz zwischen der Antenne und dem Kabel kleiner als die Freiraum-Impedanz ist.

17. Signalübertragungssystem nach Anspruch 14, 15 oder 16, wobei die RF-Ansteuerung auf eine Referenzpegelverbindung bezogen ist.

18. Signalübertragungssystem nach Anspruch 17, wobei die Referenzpegelverbindung eine Masse für das Übertragungssystem umfasst, die mit einer Masse für die sich ausbreitende Welle gekoppelt ist.

19. Signalübertragungssystem nach Anspruch 18, wobei die Kopplung zwischen der Masse des Übertragungssystems und der Masse für die sich ausbreitende Welle eine Impedanz hat, die im wesentlichen kleiner oder gleich der Freiraum-Impedanz ist.

20. Signalübertragungssystem nach Anspruch 17, 18 oder 19, wobei die Referenzpegelverbindung einen Stromnetzverdrahtungsabschnitt für das Signalübertragungssystem umfasst, der für das RF-Signal im wesentlichen von dem elektrischen Leiter getrennt ist.

21. Signalübertragungssystem nach Anspruch 17, 18 oder 19, wobei die Referenzpegelverbindung eine Verbindung zum freien Raum umfasst.

22. Signalübertragungssystem nach Anspruch 21, wobei die Verbindung zum freien Raum eine zweite Antenne (1340) und einen zweiten Antennentreiber (1342) zum Ansteuern der zweiten Antenne mit einer invertierten Version des RF-Signals umfasst.

23. Signalübertragungssystem nach einem der Ansprüche 14 bis 22, wobei die Sendeantenne ein Sendeantennenpaar (1150 a, b) umfasst, wobei das System ferner einen Sendeantennentreiber umfasst, der dafür konfiguriert ist, das Sendeantennenpaar derartig anzusteuern, daß ein Signal, das von einer Antenne des Antennenpaars gesendet wird, eine Phasenverzögerung in bezug auf ein Signal hat, das von der anderen Antenne des Antennenpaars gesendet wird.

24. Signalübertragungssystem nach einem der Ansprüche 14 bis 23, wobei die Sendeantenne eine Monopolantenne, eine Magnetantenne, eine Breitbandantenne oder einen Wendelleiter umfasst.

25. Signalübertragungssystem nach Anspruch 24, wobei die Sendeantenne derartig positioniert ist, daß eine kapazitive Impedanz zwischen der Sendeantenne und dem Leiter kleiner als die Freiraum-Impedanz ist.

26. Signalübertragungssystem nach einem der Ansprüche 14 bis 25, wobei der Leiter einen Leiter eines elektrischen Stromnetzkabels oder einen Leiter umfasst, der für eine Verbindung mit einem elektrischen Stromnetzkabel konfiguriert ist.

## Revendications

1. Procédé de communication d'un signal hyperfréquence ultra-large bande (UWB) présentant une fréquence de 1 GHz ou plus en utilisant un câble (308) comprenant au moins un conducteur, le procédé comprenant:
le positionnement d'une antenne d'émission (504; 512) en un point d'émission sur ledit câble à une certaine distance dudit câble pour coupler ledit signal hyperfréquence dans ledit câble;
le pilotage de ladite antenne d'émission à l'aide dudit signal hyperfréquence afin d'induire sur ledit câble une onde de propagation pour qu'elle se propage le long dudit câble;
le positionnement d'une antenne de réception (504; 512) pour recevoir un signal électromagnétique généré par ladite onde se propageant;
la réception d'une version dudit signal hyperfréquence en utilisant ladite antenne de réception; et
dans lequel ladite onde se propageant comprend un signal asymétrique.

2. Procédé selon la revendication 1, dans lequel ladite distance est égale ou inférieure à une longueur d'onde d'espace libre moyen dudit signal hyperfréquence.

3. Procédé selon la revendication 1, dans lequel ladite distance est telle qu'une impédance capacitive entre ladite antenne et ledit câble est inférieure à l'impédance d'espace libre.

4. Procédé selon l'une quelconque des revendications précédentes, dans lequel une antenne prise parmi ladite antenne d'émission et ladite antenne de réception comprend une antenne monopolaire.

5. Procédé selon l'une quelconque des revendications précédentes, dans lequel une antenne prise parmi ladite antenne d'émission et ladite antenne de réception comprend une antenne boucle magnétique.

6. Procédé selon l'une quelconque des revendications 1 à 5, dans lequel au moins une antenne prise parmi ladite antenne d'émission et ladite antenne de réception est sensiblement isolée résistivement par rapport audit au moins un conducteur.

7. Procédé selon l'une quelconque des revendications précédentes, dans lequel ledit pilotage comprend le pilotage de ladite antenne d'émission par rapport à une masse.

8. Procédé selon la revendication 7, dans lequel ladite masse comprend une connexion sur l'espace libre.

9. Procédé selon la revendication 7, dans lequel ladite masse comprend une masse locale présentant un couplage capacitif sur une masse pour ladite onde se propageant.

10. Procédé selon la revendication 9, dans lequel ladite masse comprend une partie de câblage d'alimentation.

11. Procédé selon l'une quelconque des revendications précédentes, dans lequel le pilotage comprend le fait de faire en sorte que ladite onde se propage préférentiellement suivant une direction le long dudit câble.

12. Procédé selon l'une quelconque des revendications précédentes, dans lequel ledit câble comprend un câble d'alimentation alternative.

13. Procédé selon l'une quelconque des revendications précédentes, dans lequel ledit câble comprend un câble d'alimentation alternative.

14. Système de transmission de signal radiofréquence (rf) ultra-large bande (UWB) (1300) pour émettre un signal d'au moins 1 GHz qui est guidé par un conducteur électrique, le système comprenant:
un conducteur électrique (308) pour guider ledit signal;
une antenne d'émission (504; 512) positionnée à une certaine distance dudit conducteur pour coupler ledit signal hyperfréquence dans ledit câble, ladite antenne étant sensiblement isolée résistivement vis-à-vis dudit conducteur; et
une entrée (1304), couplée à ladite antenne d'émission, pour recevoir ledit signal rf et pour fournir un pilotage rf correspondant audit signal sur ladite antenne afin de lancer une onde se propageant correspondant audit signal sur ledit conducteur électrique; et
dans lequel ladite onde se propageant comprend une tension asymétrique.

15. Système selon la revendication 14, dans lequel ladite distance dudit conducteur électrique est inférieure à une longueur d'onde dudit signal rf.

16. Système selon la revendication 14, dans lequel ladite distance est telle qu'une impédance capacitive entre ladite antenne et ledit câble est inférieure à l'impédance d'espace libre.

17. Système de transmission de signal selon la revendication 14, 15 ou 16, dans lequel ledit pilotage rf est référencé par rapport à une connexion de niveau de référence.

18. Système de transmission de signal selon la revendication 17, dans lequel ladite connexion de niveau de référence comprend une masse pour ledit système de transmission couplée à une masse pour ladite onde se propageant.

19. Système de transmission de signal selon la revendication 18, dans lequel ledit couplage entre ladite masse de système de transmission et ladite masse pour ladite onde se propageant présente une impédance sensiblement égale ou inférieure à l'impédance d'espace libre.

20. Système de transmission de signal selon la revendication 17, 18 ou 19, dans lequel ladite connexion de niveau de référence comprend une partie de câblage d'alimentation pour ledit système de transmission qui, pour ledit signal rf, est sensiblement isolée dudit conducteur électrique.

21. Système de transmission de signal selon la revendication 17, 18 ou 19, dans lequel ladite connexion de niveau de référence comprend une connexion sur l'espace libre.

22. Système de transmission de signal selon la revendication 21, dans lequel ladite connexion sur l'espace libre comprend une seconde antenne (1340) et un second dispositif de pilotage d'antenne (1342) pour piloter ladite seconde antenne avec une version inversée dudit signal rf.

23. Système de transmission de signal selon l'une quelconque des revendications 14 à 22, dans lequel ladite antenne d'émission comprend une paire d'antennes d'émission (1150a, b), le système comprenant en outre un dispositif de pilotage d'antenne d'émission configuré pour piloter ladite paire d'antennes d'émission de telle sorte qu'un signal émis depuis l'une de ladite paire d'antennes présente un retard de phase par rapport à un signal émis depuis l'autre de ladite paire d'antennes.

24. Système de transmission de signal selon l'une quelconque des revendications 14 à 23, dans lequel ladite antenne d'émission comprend une antenne monopolaire, une antenne magnétique, une antenne large bande ou un conducteur hélicoïdal.

25. Système de transmission de signal selon la revendication 24, dans lequel ladite antenne d'émission est positionnée de telle sorte qu'une impédance capacitive entre ladite antenne d'émission et ledit conducteur soit inférieure à l'impédance d'espace libre.

26. Système de transmission de signal selon l'une quelconque des revendications 14 à 25, dans lequel ledit conducteur comprend un conducteur d'un câble d'alimentation électrique ou un conducteur configuré pour une connexion sur un câble d'alimentation électrique.
